# EUROPÄISCHE PATENTSCHRIFT

(11) **EP 1 604 884 B1**
(45) Veröffentlichungstag und Bekanntmachung des Hinweises auf die Patenterteilung: **24.09.2008**
(21) Anmeldenummer: 05012093.0
(22) Anmeldetag: 04.06.2005
(51) Int. Cl.: B62D 11/00, B62D 1/16

(54) **Einrichtung zur Umkehrung der Lenkbewegung einer Lenkradwelle**
Device for reversing the steering movement of a steering wheel shaft
Dispositif d'inversion du mouvement de direction d'un arbre de volant

(30) Priorität: 11.06.2004 DE 102004028532
(43) Veröffentlichungstag der Anmeldung: 14.12.2005
(73) Patentinhaber: Renk Aktiengesellschaft, 86159 Augsburg (DE)
(72) Erfinder: Witzenberger, Max, 86447 Aindling (DE)
(74) Vertreter: Schlotter, Alexander Carolus Paul

(56) Entgegenhaltungen:
- DE-A1- 1 780 106
- DE-A1- 3 819 446
- DE-A1- 19 637 531
- DE-U1- 8 308 710
- US-A- 3 687 210

## Beschreibung

Die Erfindung betrifft eine Einrichtung zur Umkehrung der Lenkbewegung einer Lenkradwelle gemäß den Merkmalen des Patentanspruchs 1.

Kettenfahrzeuge, vor allem schnelle Kettenfahrzeuge, werden meist durch Überlagerungslenkungen gelenkt, wobei den Gleisketten neben der Hauptantriebsrichtung weitere Antriebsbewegungen überlagert werden. Dabei ist die Überlagerungsdrehrichtung z.B. bei Vorwärtsfahrt und einer Linkskurve an der rechten Kette vorwärts gerichtet und an der linken Kette rückwärts gerichtet.
Bei Rückwärtsfahrt bleiben diese Überlagerungsdrehrichtungen ohne weitere Einrichtungen gleich, so dass sich die gefahrene Spur umkehrt. Das heißt anders als beim PKW oder LKW würde das Fahrzeug seine Drehrichtung beibehalten.
Da Kettenfahrzeuge nur einen verschwindend geringen Prozentsatz aller Fahrzeuge ausmachen, besteht vielfach der Wunsch, dass ein Kettenfahrzeug genauso reagiert wie ein Radfahrzeug, d.h. bei der Rückwärtskurvenfahrt die gleiche Spur einhält, wie bei Vorwärtsfahrt.
Aus der DE 38 19 446 C2 ist eine Vorrichtung zur Umschaltung von Lenkgetrieben bekannt, mit welcher die Übertragungsdrehrichtung der Lenkbewegung der Lenkradwelle bei Fahrtrichtungswechsel umkehrbar ist. Ein mit der Lenkradwelle verbundenes Zahnrad treibt ein Vorwärts- und ein Rückwärtsritzel jeweils in gegenläufiger Richtung an. Zur Umschaltung kann wechselweise das Vor- oder Rückwärtsritzel über einen Schwenkmechanismus mit einer Verzahnung an einem Verstellelement in Eingriff gebracht werden. Das Verstellelement wird durch das Vor-bzw. Rückwärtsritzel bei der gleichen Lenkraddrehung in unterschiedlicher Richtung ausgelenkt und steuert den Lenkmechanismus des Fahrzeugs mit der entsprechenden Bewegung an. Die Umschaltung ist nur in der Geradeausstellung der Lenkung möglich. Hierzu wird der Schwenkmechanismus in seiner jeweiligen Schaltstellung durch ein Sperrelement blockiert. In der Mittellage der Lenkung, welche bei Geradeausfahrt eingestellt ist, kann das Sperrelement in eine Vertiefung am Verstellelement eintauchen und gibt damit den Schwenkmechanismus für einen Umschaltvorgang frei.
Der Nachteil dieser Anordnung liegt in der elektrischen oder hydraulischen Ansteuerung des Systemes. Ein Umschalten während der Fahrt bei Ausfall des elektrischen und/oder des hydraulischen Umsteuersystemes wird nicht verhindert.
Desweiteren wird ein Losrollen des Fahrzeuges entgegen der eingelegten Fahrtrichtung und damit der falsch angesteuerte Lenksinn nicht verhindert.
Aus der DE 83 08 710 U1 ist eine Einrichtung zur Umkehrung der Lenkbewegung eines Kettenfahrzeugs bekannt, bei der sich ein Lenkrad in einer Geradeausstellung befinden muss, wenn zur Rückwärtsfahrt eine Umschaltung erfolgt. Zur Umschaltung wird ein Kupplungsstift magnetisch wahlweise in Einriff mit einem direkt mit einer Lenkradwelle gekoppelten Hohlrad oder in Einriff mit einem über ein Zwischenrad mit dner Lenkradwelle gekoppeltes Hohlrad gebracht und verbindet das jeweilige Hohlrad mit einem Lenkgetriebe des Fahrzeuges.
Aus der DE 196 37 531 A1 ist ein Einrichtung zur Umkehrung der Lenkbewegung bekannt, deren Betätigung nur in Nulllage der Lenksteuerung erfolgen darf, was über einen Sensor und eine entsprechend von ihm angesteuerte Steueranordnung gewährleistet wird. Zur Umschaltung wird werden eine mit einem Lenkrad verbundene Antriebswelle und eine mit einer Lenksteuerung verbundene Abtriebswelle wahlweise über ein oder zwei miteinander kämmende Zahnräder miteinander gekoppelt.
In beiden Systemen ist ein Umschalten unabhängig vom Bewegungszustand des Fahrzeugs möglich. Dies beeinträchtigt die Betriebssicherheit.
Aufgabe der Erfindung ist es, eine betriebssichere Einrichtung zur Umschaltung eines Lenkgetriebes zu schaffen, mit welcher die Bewegungsrichtung der Lenkradwelle bei Rückwärtsfahrt umgekehrt werden kann.
Diese Aufgabe wird erfindungsgemäss durch die kennzeichnenden Merkmale des Patentanspruchs 1 gelöst.
Vorteilhafterweise kann die Einrichtung beliebig im Fahrzeug angeordnet werden.
Mit einer erfindungsgemässen Einrichtung ist es vorteilhaft möglich, alle unsicheren Fahrzustände zu vermeiden.
Dies geschieht durch die Auswertung von hydraulischen und elektrischen Signalen aus dem Gangwechselgetriebe und die damit verbundene redundante Sperre des Umschaltens während der Fahrt und durch direkten Eingriff in das Gangwechselgetriebe, um ein Losrollen entgegen der gewählten Fahrtrichtung zu verhindern.

Weitere Merkmale und Vorteile ergeben sich aus den Unteransprüchen in Verbindung mit der Beschreibung.

Die Erfindung wird nachfolgend anhand den zugehörigen schematischen Zeichnungen näher erläutert. Die
Fig. 1 zeigt eine erfindungsgemässe Einrichtung in der Schaltposition für Vorwärtsfahrt,
Fig. 2 stellt die Schaltposition für eine Rückwärtsfahrt dar und
Fig. 3 zeigt eine Neutral bzw. Übergangsstellung.

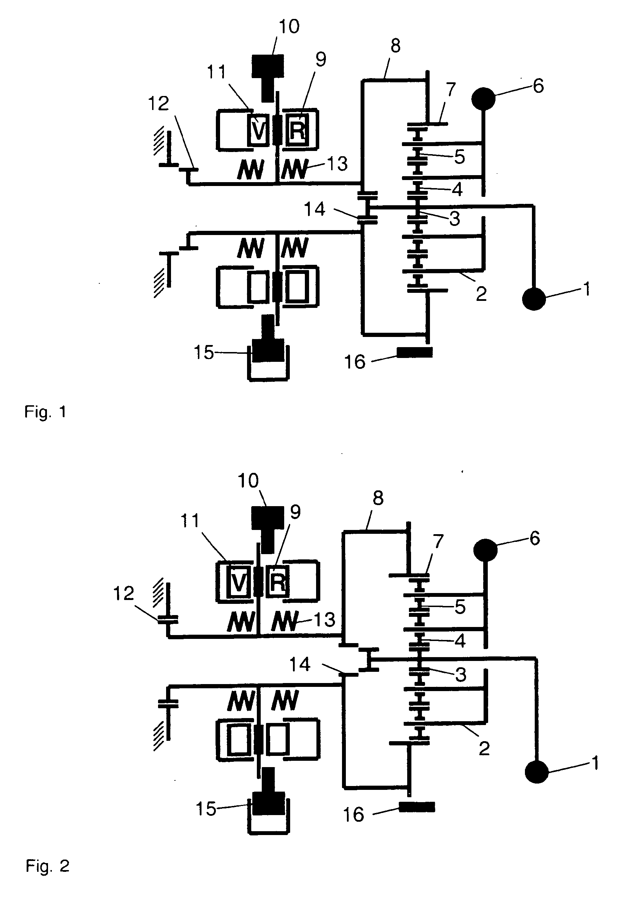

In Figur 1 ist eine erfindungsgemäß ausgeführte Einrichtung beispielhaft schematisch dargestellt. Über das Lenkrad 1 stellt der Fahrer die gewünschte Lenkrichtung ein, die über einen Hebel 6 zur Lenkung übertragen wird. Besonders vorteilhaft kann die vorliegende Erfindung bei Kettenfahrzeugen oder Radfahrzeugen mit Radseitenlenkung eingesetzt werden, wobei der Hebel 6 beispielsweise mit einer Lenkhydrostatik zusammenwirkt.
Um eine stufenlose oder gestufte Überlagerungsdrehzahl zu erzeugen gibt es neben der hydrostatischen eine Reihe von weiteren Lösungen: mechanische (gestufte), elektrische oder hydrodynamische Antriebe etc. und jede denkbare Kombination hieraus. Je nach dem welche Lösung an einem Fahrzeug realisiert ist, wird das entsprechende Element der jeweiligen Lenkanlage durch die erfindungsgemäße Einrichtung angesteuert.
Handelt es sich um elektrische Antriebe oder um elektrische bzw. elektrohydraulische Ansteuerungen, so ist die Umschaltung der Lenkbewegung einer Lenkradwelle relativ einfach zu bewerkstelligen.
Da es sich bei der Lenkanlage um Sicherheitseinrichtungen handelt, wird aber oft der rein mechanischen Ansteuerung der Vorzug gegeben. So ist es bei Überlagerungslenkungen zum Beispiel bekannt, die Schwenkscheibe des Hydrostatikmotors direkt mechanisch ― ggf. auch servounterstützt ― mit dem Lenkhandle zu verbinden.
Um unsichere Fahrzustände zu vermeiden, darf es während der Fahrt, insbesondere während der Kurvenfahrt nicht zu einem Umschalten kommen, auch nicht bei Stromausfall. Auch wenn gewollt während der Fahrt die andere Fahrtrichtung eingelegt wird, darf es nicht zu einer Umschaltung kommen, d.h. Umschalten sollte vorzugsweise nur im Stillstand stattfinden.
Für das Kettenfahrzeug ist auch der Sonderfall des Drehens auf der Stelle zu betrachten, der auch einen Fahrzustand darstellt, während dem es nicht zu einer Umschaltung kommen sollte.
Um eine betriebssichere Umschaltung der Lenkbewegung zu ermöglichen, wird im Gestänge eine erfindungsgemäße Einrichtung eingebaut, die in der beispielhaft dargestellten Ausführung mit einem Doppelplanetensatz die Drehrichtung umkehren kann.
Es sind vorzugsweise drei Schaltstellungen möglich, nämlich Vorwärts, Rückwärts und eine Neutral bzw. Übergangsstellung.
Das Lenkrad 1 ist über eine Lenkradwelle mit einem Sonnenrad 3 verbunden, welches mit ersten Planetenrädern 4 des Doppelplanetensatzes zusammenwirkt. Weitere Planetenräder 5 stehen im Eingriff mit den ersten Planetenrädern 4 und wälzen sich gleichzeitig in einem Hohlrad 7 ab. Die Planetenräder 4, 5 sind drehbar in einem Planetenträger 2 gelagert, an welchem der Hebel 6 angeordnet ist.
Im Vorwärtsbetrieb (Fig. 1) soll normal gelenkt werden. Vorzugsweise wird über die hydraulische Betätigung der Vorwärts-Gangkupplung des Fahrzeugschaltgetriebes ein Betätigungszylinder für Vorwärtsfahrt 11 an der Einrichtung geschaltet. Die Vorwärts-Gangkupplung des Fahrzeugschaltgetriebes wird auch eingeschaltet, wenn zur Blockierung des Gangschaltgetriebes beispielsweise gleichzeitig der 1. und der 4. Gang oder eine andere dem Drehen auf der Stelle entsprechenden Schaltstellung eingelegt ist.
Der Betätigungszylinder für Vorwärtsfahrt 11 wirkt mit einem drehbar gelagerten Schaltelement 8 zusammen, an welchem das Hohlrad 7 sowie Verzahnungen 12, 14 angeordnet sind. Der Betätigungszylinder für Vorwärtsfahrt 11 verschiebt das Schaltelement 8 in axialer Richtung, wobei die Verzahnung 12 aus ihrer gehäusefesten Gegenverzahnung herausgezogen wird und das Schaltelement 8 sich gegenüber dem Gehäuse frei drehen kann. Mit der Verschiebebewegung des Betätigungszylinder für Vorwärtsfahrt 11 wird auch eine weitere Verzahnung 14 mit einer entsprechenden Gegenverzahnung an der Lenkradwelle in Eingriff gebracht, wobei die Hohlradverzahnung 7 weiterhin in Eingriff mit den Planetenrädern 5 bleibt. Somit sind das Sonnenrad 3 und das Hohlrad 7 drehfest miteinander gekoppelt und die Lenkbewegung des Lenkrades 1 wird in gleicher Drehrichtung und Drehzahl auf den Hebel 6 übertragen.
Durch geeignete elektrische Getriebeschaltungen kann verhindert werden, dass das Fahrzeug entgegen der eingelegten Fahrrichtung losrollen kann. Wird das Fahrzeug aber normal bewegt, so kann der Umschaltmechanismus besonders vorteilhaft durch zwei unabhängig voneinander arbeitenden Sperren in seiner jeweiligen Endstellung blockiert werden, um gewollte oder ungewollte Umschaltungen auszuschließen.
Eine erste Sperre 10, beispielsweise ein Verriegelungsmagnet, kann elektrisch betätigt werden, sobald eine elektrisch erkennbare Fahrzeuggeschwindigkeit vorliegt. Eine zweite Sperre 15, beispielsweise ein hydraulisch oder pneumatisch betätigter Verriegelungskolben, kann über einen von einer Schlepppumpe erzeugten Öldruck geschaltet werden. Dieser Druck wird erzeugt, sobald das Fahrzeug sich bewegt.
Um die Umschaltung im Fehlerfall zusätzlich zu verhindern, und frühzeitiges Umschalten im Normalfall zu vermeiden, sind die Verzahnungen 12, 14 so ausgelegt, dass sie nur in der Mittelstellung ineinander geschoben werden können. Ein Umschalten ist also zwangsweise mechanisch nur bei Geradeausfahrt möglich.
Statt Verzahnungen können auch Klauenkupplungen oder andere formschlüssige Kupplungen verwendet werden, wenn deren beiden Kupplungsteile nur in einer einzigen relativen Drehlage zueinander gekuppelt werden können.

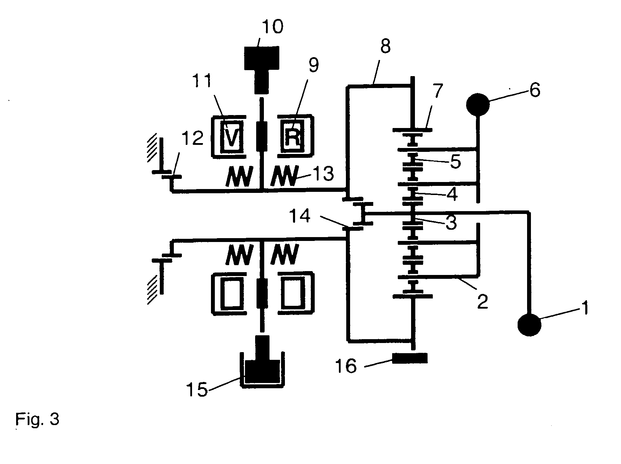

Für die Rückwärtsfahrt soll die Betätigungsrichtung des Lenkrades 1 umgekehrt werden. Hierzu kann der Betätigungszylinder 9 für Rückwärtsfahrt vorzugsweise über die hydraulische Betätigung der Rückwärts-Gangkupplung des Schaltgetriebes eingeschaltet werden. In Figur 2 ist die erfindungsgemäße Ausführung in der Schaltstellung "Rückwärts" dargestellt. Durch die Bewegung des Betätigungszylinders 9 wird das Schaltelement 8 so in axialer Richtung verschoben, dass die Verzahnung 14 auseinander und die Verzahnung 12 ineinander geschoben werden, wobei das Hohlrad 7 weiterhin in Eingriff mit den Planetenrädern 5 bleibt. Die Hohlradverzahnung ist hierzu vorzugsweise breiter als die Planetenräder. Durch die Schaltbewegung ist das Hohlrad 7 nun drehfest mit dem Gehäuse verbunden und das Sonnenrad 3 vom Hohlrad 7 entkoppelt. Die vom Lenkrad 1 vorgegebenen Lenkbewegungen werden über das Sonnenrad 3 und die Planetenräder 4, 5 übertragen, wobei diese sich im gehäusefesten Hohlrad 7 abwälzen und dabei den Planetenträger 2 entgegen der Drehrichtung der Lenkradwelle drehen. Der mit dem Planetenträger 2 verbundene Hebel 6 wird dementsprechend auch gegen die Drehrichtung der Lenkbewegung verdreht. Die Übersetzung des Planetengetriebes wird vorzugsweise so ausgelegt, dass die Lenkradbewegung mit unveränderter Drehgeschwindigkeit übertragen wird.
Durch geeignete elektrische Getriebeschaltungen kann verhindert werden, dass das Fahrzeug entgegen der eingelegten Fahrrichtung losrollen kann. Wird das Fahrzeug aber normal bewegt, so kann der Umschaltmechanismus wie vorher bereits erwähnt durch die zwei unabhängig voneinander arbeitenden Sperren 10, 15 in seiner Endstellung blockiert werden, um gewollte oder ungewollte Umschaltungen auszuschließen.
Aus Figur 3 geht die Schaltstellung "Neutral" bzw. eine Übergangsstellung hervor. Bei Fehlen der entsprechenden hydraulischen Signale ist von einer Gangwahlschalterstellung Neutral auszugehen. In diesem Fall geben die Verriegelungen 10, 15 das Schaltelement 8 frei und es wird vorzugsweise über Federn 13 in einer Mittelstellung zentriert. Diese Mittelstellung blockiert jede Bewegung des Lenkhebels 1, denn die Verzahnung 12 am Schaltelement 8 greift noch teilweise in ihre gehäusefeste Gegenverzahnung ein und gleichzeitig ist die Lenkradwelle noch an der anderen Verzahnung 14 im Eingriff. Das bedeutet in Fahrtrichtungsstellung neutral kann nicht gelenkt werden.
Es kann jedoch auch vorgesehen werden das Schaltelement 8 bei Fehlen der entsprechenden Signale, federnd in der Schaltstellung "Vorwärts" oder "Rückwärts" zu halten.

Weiterhin kann eine elektrische Überwachung, z.B. mit einem elektrischen Stellungssensor 16, vorgesehen werden, die das System überwacht und den Fahrer alarmiert, wenn im Fehlerfall die Stellung der Sperren nicht den dafür erforderlichen Bedingungen entspricht. Es kann auch vorgesehen werden, dass die elektrische Überwachung auch in das Schaltgetriebe eingreift und ein falsches Anrollen durch Blockieren des Schaltgetriebes verhindert.

Neben der Verwendung der unterschiedlichen Hydraulikdrücke, bzw. der elektrischen Signale, die das Schalten des Gangwechselgetriebes verursachen, zur Ansteuerung der Betätigungszylinder 9, 11 kann auch eine manuelle Ansteuerung vorgesehen werden.
Statt der Betätigungszylinder können auch andere Stelleinrichtungen vorgesehen werden.

### Bezugszeichenliste

- 1: Lenkrad
- 2: Planetenträger
- 3: Sonnenrad
- 4: Planetenrad
- 5: Planetenrad
- 6: Hebel
- 7: Hohlrad
- 8: Schaltelement
- 9: Betätigungszylinder für Rückwärts
- 10: Verriegelungsmagnet
- 11: Betätigungszylinder für Vorwärts
- 12: Verzahnung
- 13: Feder
- 14: Verzahnung
- 15: Verriegelungskolben
- 16: Stellungssensor

## Patentansprüche

1. Einrichtung zur Umkehrung der Lenkbewegung einer Lenkradwelle eines Fahrzeugs, wobei die Umkehrung nur in einer Mittellage der Lenkungseinrichtung schaltbar ist, **dadurch gekennzeichnet, dass** die Umkehrung nur im Stillstand des Fahrzeugs schaltbar ist.

2. Einrichtung nach Anspruch 1, **dadurch gekennzeichnet, dass** Umschaltungen durch elektrische und/oder hydraulische Signale eines Gangwechselgetriebes eingeleitet werden.

3. Einrichtung nach Anspruch 2, **dadurch gekennzeichnet, dass** sich an der Einrichtung bei Fehlen von Signalen aus dem Gangwechselgetriebe eine Zwischenstellung einstellt, in welcher die Lenkung blockiert ist.

4. Einrichtung nach Anspruch 2, **dadurch gekennzeichnet, dass** die Einrichtung bei Fehlen von Signalen aus dem Gangwechselgetriebe in eine Schaltstellung für Vorwärtsfahrt geschaltet wird.

5. Einrichtung nach Anspruch 3, **dadurch gekennzeichnet, dass** die Zwischenstellung während der Fahrt nicht schaltbar ist, indem eine jeweils eingelegte Stellung für Vorwärtsfahrt oder Rückwärtsfahrt während der Fahrt durch mindestens ein Fahrsignal gehalten wird.

6. Einrichtung nach Anspruch 5, **dadurch gekennzeichnet, dass** das Fahrsignal ein hydraulisches, über eine Schlepppumpe erzeugbares Signal und/oder ein elektrisches Signal ist.

7. Einrichtung nach einem der vorhergehenden Ansprüche, **dadurch gekennzeichnet, dass** die Einrichtung an einem Getriebe für ein Kettenfahrzeug angeordnet ist.

8. Einrichtung nach Anspruch 8, **dadurch gekennzeichnet, dass** eine Schaltstellung im Kettenfahrzeug, durch welche ein Fahrmanöver "Drehen um die Hochachse" eingeleitet wird, in der Einrichtung zum Schalten der Schaltstellung für Vorwärtsfahrt führt.

9. Einrichtung nach einem der vorhergehenden Ansprüche, **dadurch gekennzeichnet, dass** eine elektrische Überwachungseinrichtung (16) vorgesehen ist, welche das gesamte System überwacht und dem Fahrer Fehler angezeigt.

10. Einrichtung nach Anspruch 10, **dadurch gekennzeichnet, dass** die elektrische Überwachungseinrichtung in das Gangschaltgetriebe eingreifen kann und ein falsches Anrollen des Fahrzeugs durch Blockieren des Gangschaltgetriebes verhindert.

11. Einrichtung nach einem der vorhergehenden Ansprüche, **dadurch gekennzeichnet, dass** eine Planetengetriebeanordnung zur Umkehrung der Lenkdrehbewegung vorgesehen ist und das Lenkrad (1) mit einem Sonnenrad (3) verbunden ist, welches über einen Doppelplanetenradsatz (4, 5) mit einem gehäusefesten Hohlrad (7) zusammenwirkt, wobei sich ein Planetenradträger (2) entgegen der Drehrichtung des Lenkrades (1) verdreht und über einen Hebel (6) die Lenkanlage des Fahrzeugs ansteuert.

12. Einrichtung nach Anspruch 11, **dadurch gekennzeichnet, dass** ein axial verschiebbares Schaltelement (8) vorgesehen ist, durch welches das Hohlrad (7) in einer Schaltstellung vom Gehäuse entkoppelbar ist, so dass es sich frei drehen kann und das Sonnenrad (3) in dieser Schaltstellung drehfest mit dem Hohlrad (7) gekoppelt ist, wobei die Drehbewegung des Lenkrades (1) in der gleichen Drehrichtung auf den Hebel (6) übertragen wird.

13. Einrichtung nach Anspruch 12, **dadurch gekennzeichnet, dass** zur drehfesten Kopplung des Hohlrades (7) mit dem Gehäuse und/oder zur drehfesten Kopplung des Hohlrades (7) mit dem Sonnenrad (3) am Schaltelement (8) Verzahnungen oder Kupplungen (12, 14) vorgesehen sind, die nur in einer einzigen relativen Drehlage der Paarungspartner miteinander in Eingriff zu bringen sind.

14. Einrichtung nach Anspruch 12 oder 13, **dadurch gekennzeichnet, dass** zur Verschiebung des Schaltelements (8) hydraulische, pneumatische oder elektrische Betätigungsmittel (9, 11) und/oder Federn (13) vorgesehen sind.

15. Einrichtung nach Anspruch 12, 13 oder 14, **dadurch gekennzeichnet, dass** zur Blockierung des Schaltelements (8) in einer Schaltposition mindestens ein Verriegelungsmagnet (10) und/oder mindestens ein Verriegelungskolben (15) vorgesehen ist.

## Claims

1. A device for reversing the steering movement of a steering-wheel shaft of a vehicle, whereas the reversing is only switchable in a centre position of the steering-device **characterised in that**
the reversing is only switchable at a standstill of the vehicle.

2. Device according to claim 1, **characterised in that** switchings are initiated in response to one of electrical and/ or hydraulic signals of a change-speed gearbox.

3. Device according to claim 2, **characterised in that** with absence of signals from the change-speed gearbox the device moves to an intermediate position wherein the steering is locked.

4. Device according to claim 2, **characterised in that** with absence of signals from the change-speed gearbox the device is switched into a position associated with forward travel.

5. Device according to claim 3, **characterised in that** switching into the intermediate position is not executable while travelling, as the respectively set position for forward travel or backward travel is maintained while travelling by means of at least one signal indicating that the vehicle is travelling.

6. Device according to claim 5, **characterised in that** the travelling signal is one of a hydraulic signal which is generateable by an overrun pump and/ or is an electrical signal.

7. Device according to one of the preceding claims, **characterised in that** the device is arranged at a gearbox for a tracked vehicle.

8. Device according to claim 8, **characterised in that** one switch position in the tracked vehicle in response to a travelling position of the gearbox associated with "rotating the vehicle about a vertical axis" results in switching to the switching position for forward travel.

9. Device according to one of the preceding claims, **characterised in that** an electric monitoring device (16) is provided for monitoring the complete system and for indicating faults to the driver.

10. Device according to claim 10, **characterised in that** the monitoring device is able to interfere with the change-speed gearbox and prevents erroneous starting to roll of the vehicle by locking the change-speed gearbox.

11. Device according to one of the preceding claims, **characterised in that** a planetary gear mechanism is provided for reversing the steering rotational movement, the steering-wheel (1) is connected to a sun gear (3), which interacts via a double planetary-gear set (4, 5) with an internal gear (7) being fixed on the housing, whereas a planetary-gear carrier (2) rotates contrary to the rotational direction of the steering wheel (1) and activates the steering system of the vehicle via a lever (6).

12. Device according to claim 11, **characterised in that** an axially displaceable switching element (8) is provided for enabling to decouple the internal gear (7) from the housing in a switching position so that it is able to rotate freely and in this switching position the sun gear (3) is nonrotatable coupled to the internal gear (7) whereas the rotational movement of the steering wheel (1) is transferred to the lever (6) in the same rotational direction.

13. Device according to claim 12, **characterised in that** for nonrotatable coupling of the internal gear (7) with the housing and/ or for rotatable coupling of the internal gear (7) with the sun gear, toothing systems or clutches (12, 14) are provided at the switching element (8), which are only engageable with each other in one single rotational position between the pairing partners.

14. Device according to claim 12 or 13, **characterised in that** for displacing of the switching element (8) one of hydraulic, pneumatic or electric actuating means (9, 11) and/ or springs (13) are provided.

15. Device according to claim 12, 13 or 14, **characterised in that** at least one interlock magnet (10) and/ or at least one interlock piston (15) is provided for locking the switching element (8) in one switching position.

## Revendications

1. Dispositif d'inversion du mouvement de direction d'un arbre de volant de direction d'un véhicule, l'inversion ne pouvant être commutée que dans une position centrale du dispositif de direction, **caractérisé en ce que** l'inversion ne peut être commutée que dans l'état d'arrêt du véhicule.

2. Dispositif selon la revendication 1, **caractérisé en ce que** des commutations d'inversion sont initiées par des signaux électriques et/ou hydrauliques d'une boite de transmission à changement de vitesses.

3. Dispositif selon la revendication 2, **caractérisé en ce que** sur le dispositif s'établit, en l'absence de signaux en provenance de la boite de transmission à changement de vitesses, une position intermédiaire dans laquelle la direction est bloquée.

4. Dispositif selon la revendication 2, **caractérisé en ce que** le dispositif, en l'absence de signaux en provenance de la boite de transmission à changement de vitesses, est commuté dans une position de commutation pour la marche avant.

5. Dispositif selon la revendication 3, **caractérisé en ce que** la position intermédiaire ne peut pas être commutée pendant la marche du véhicule, grâce au fait qu'une position respectivement enclenchée pour la marche avant ou la marche arrière est maintenue conservée pendant la marche par au moins un signal de marche.

6. Dispositif selon la revendication 5, **caractérisé en ce que** le signal de marche est un signal hydraulique pouvant être engendré par l'intermédiaire d'une pompe secondaire, et/ou un signal électrique.

7. Dispositif selon l'une des revendications précédentes, **caractérisé en ce que** le dispositif est agencé sur une boite de transmission pour un véhicule sur chenilles.

8. Dispositif selon la revendication 7, **caractérisé en ce qu'**une position de commutation dans le véhicule sur chenilles, par laquelle est initiée une manoeuvre de marche de "pivotement ou rotation autour de l'axe vertical", conduit, dans le dispositif, à la commutation de la position de commutation pour la marche avant.

9. Dispositif selon l'une des revendications précédentes, **caractérisé en ce qu'**il est prévu un dispositif de surveillance électrique (16) qui assure la surveillance de l'ensemble du système et indique des défauts au conducteur.

10. Dispositif selon la revendication 9, **caractérisé en ce que** le dispositif de surveillance électrique peut intervenir dans la boite de transmission à changement de vitesses, et empêche un démarrage erroné du mouvement de roulement du véhicule par blocage de la boite de transmission à changement de vitesses.

11. Dispositif selon l'une des revendications précédentes, **caractérisé en ce qu'**il est prévu un agencement de transmission à train épicycloïdal pour l'inversion du mouvement de rotation de direction, et le volant de direction (1) est relié à une roue planétaire centrale (3) qui coopère, par l'intermédiaire d'un double jeu de satellites (4, 5), avec une couronne (7) fixe avec le carter, un porte-satellite (2) tournant relativement à l'encontre du sens de rotation du volant de direction (1) et commandant, par l'intermédiaire d'un levier (6), l'installation de direction du véhicule.

12. Dispositif selon la revendication 11, **caractérisé en ce qu'**il est prévu un élément de commutation (8) pouvant coulisser axialement, par l'intermédiaire duquel la couronne (7) peut être découplée du carter dans une position de commutation, de sorte qu'elle peut tourner librement et que dans cette position de commutation, la roue planétaire centrale (3) est couplée de manière fixe en rotation avec la couronne (7), le mouvement de rotation du volant de direction (1) étant transmis dans le même sens de rotation au levier (6).

13. Dispositif selon la revendication 12, **caractérisé en ce que** pour le couplage fixe de rotation de la couronne (7) avec le carter et/ou le couplage fixe de rotation de la couronne (7) avec la roue planétaire centrale (3), sur l'élément de commutation (8) sont prévus des dentures ou des accouplements (12, 14), qui ne peuvent être mis en prise réciproque que dans une seule position relative de rotation des partenaires des paires considérées.

14. Dispositif selon la revendication 12 ou la revendication 13, **caractérisé en ce que** pour le coulissement de l'élément de commutation (8) sont prévus des moyens d'actionnement (9, 11) hydrauliques, pneumatiques ou électriques et/ou des ressorts (13).

15. Dispositif selon la revendication 12, 13 ou 14, **caractérisé en ce que** pour le blocage de l'élément de commutation (8) dans une position de commutation, il est prévu au moins un aimant de verrouillage (10) et/ou au moins un piston de verrouillage (15).
